# EUROPÄISCHE PATENTSCHRIFT

(11) **EP 1 782 589 B1**
(45) Veröffentlichungstag und Bekanntmachung des Hinweises auf die Patenterteilung: **06.08.2008**
(21) Anmeldenummer: 05779846.4
(22) Anmeldetag: 17.08.2005
(51) Int. Cl.: H04L 12/56, H04L 29/06

(54) **VERFAHREN ZUM UMSCHALTEN EINER KOMMUNIKATIONSVERBINDUNG VON EINEM ERSTEN VERBINDUNGSWEG AUF EINEN ZWEITEN VERBINDUNGSWEG**
METHOD FOR SWITCHING A COMMUNICATION CONNECTION FROM A FIRST CONNECTION PATH TO A SECOND CONNECTION PATH
PROCEDE POUR FAIRE PASSER UNE LIAISON DE COMMUNICATION D'UNE PREMIERE VOIE DE TRANSMISSION A UNE DEUXIEME VOIE DE TRANSMISSION

(30) Priorität: 24.08.2004 DE 102004041015
(43) Veröffentlichungstag der Anmeldung: 09.05.2007
(73) Patentinhaber: Siemens Enterprise Communications GmbH & Co. KG, 81379 München (DE)
(72) Erfinder: FARTMANN, Alfons, 85748 Garching (DE); KLAGHOFER, Karl, 81373 München (DE)
(74) Vertreter: Maier, Daniel Oliver
(86) Internationale Anmeldenummer: PCT/EP2005/054046
(87) Internationale Veröffentlichungsnummer: WO 2006/021537

(56) Entgegenhaltungen:
- WO-A-00/72536
- US-A1- 2003 202 528
- US-B1- 6 434 606
- US-B1- 6 480 892

## Beschreibung

Die vorliegende Erfindung betrifft ein Verfahren zum Umschalten einer paket-orientierten Kommunikationsverbindung zwischen einer empfangenden Einheit und einer sendenden Einheit von einem ersten Verbindungsweg auf einen zweiten, Verbindungsweg, bei dem über den ersten Verbindungsweg übermittelte Pakete eine erste Paketlaufzeit aufweisen und in einem ersten Zwischenspeicher der empfangenden Einheit zwischengespeichert werden und über den zweiten Verbindungsweg übermittelte Pakete eine zweite Kürzerte Paketlaufzeit aufweisen und in einem zweiten Zwischenspeicher der empfangenden Einheit zwischengespeichert werden. Des Weiteren betrifft die Erfindung eine empfangende Einheit zur Durchführung des Verfahrens.

Aufgrund einer zunehmenden globalen Ausrichtung von Unternehmen nimmt die Nutzung von Telekommunikationsdiensten zur Übermittlung von Sprache und Daten ständig zu. Dies hat zur Folge, dass die durch diese Telekommunikationsdienste verursachten Kosten ständig steigen und zu einem erheblichen Kostenfaktor für die Unternehmen werden, die Möglichkeiten zur Reduzierung dieser Kosten suchen. Eine Möglichkeit Daten kostengünstig und weltweit übermitteln zu können, bieten globale paket-orientierte Kommunikationsnetze, wie beispielsweise das 'Internet'.

In derartigen paket-orientierten Echtzeit-Kommunikationssystemen existieren Szenarien, in welchen eine aktive Kommunikationsverbindung zwischen zwei an das paket-orientierte Kommunikationsnetz angeschlossenen Einheiten durch eine neue Kommunikationsverbindung über einen neuen weg ersetzt werden soll. Gründe dafür können beispielsweise sein:
a) Mobilitätsszenarien, wie beispielsweise ein Handover bei mobilen Endgeräten, z.B. WLAN-Endgeräten;
b) Qualitätsprobleme oder sogar ein Ausfall des Kommunikationsnetzes auf dem bestehenden Verbindungsweg;
c) Umschalten auf einen kostengünstigeren Verbindungsweg; oder
d) Optimierung des verbindungswegs, beispielsweise in Bezug auf die Anzahl der auf dem Verbindungsweg zu durchlaufenden Netzknoten - in der Literatur häufig als Transit-Knoten bzw. Hops bezeichnet - oder die Reduktion einer bestehenden Ende-zu-Ende Verzögerung - in der Literatur als Delay bezeichnet.

Aus der US-Patentschrift US 6,751,210 ist ein Verfahren bekannt, bei dem eine Übermittlung von im Rahmen einer Sprachverbindung zu übermittelnden Daten über ein Computernetzwerk, wie beispielsweise dem 'Internet' ermöglicht wird. Des Weiteren ist bekannt, dass in Fällen, in denen im Rahmen einer realzeitkritischen Übertragung von Sprachdaten über das Computernetzwerk eine ausreichende Übertragungsgüte nicht mehr zugesichert werden kann, eine neue Verbindung über ein alternatives Kommunikationsnetz - beispielsweise ein ISDN-orientiertes Kommunikationsnetz (Integrated Services Digital Network) - eingerichtet wird, und die zu übermittelnden Daten im Weiteren über diese neue Verbindung übermittelt werden.

Außerdem ist aus Dokument WO 00/72536 A ein automatisches Umschalten von Echtzeit-Verbindugen zwischen alternativen Übertragungspfaden basierend auf der Dienstgüte der zur Verfügung stehenden Pfade bekannt.

Auf der Senderseite gibt es für die an der Kommunikationsverbindung beteiligte Einheit in Abhängigkeit des vorliegenden Szenarios, des verwendeten Verbindungssteuerungsprotokolls - beispielsweise SIP, H.323 oder andere proprietäre Protokolle - und/oder anderer Kriterien einen definierten Umschaltezeitpunkt, ab dem die zu übertragenden Daten - beispielsweise Sprachpakete - über den neuen Verbindungsweg gesendet werden. Ein Paket N wird somit noch über den alten bestehenden Verbindungsweg, das Paket N+1 bereits über den neuen Verbindungsweg übermittelt.

In Fällen, in denen der neue Verbindungsweg "kürzer" ist, als der alte Verbindungsweg besteht auf der Empfangsseite für die an der Kommunikationsverbindung beteiligte Einheit eine hohe Wahrscheinlichkeit dafür, dass zum Zeitpunkt des Eintreffens der ersten Pakete über den neuen Verbindungsweg, sich noch Pakete im Zwischenspeicher - in der Literatur häufig als Jitter Buffer bezeichnet - des alten Verbindungsweges befinden, bzw. sogar noch auf dem alten Verbindungsweg übertragen werden, d.h. noch gar nicht an der empfangenden Einheit eingetroffen sind.

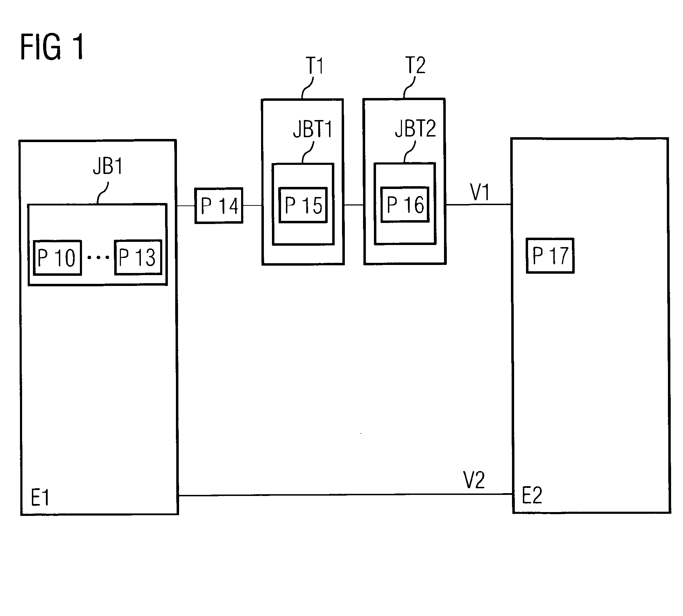

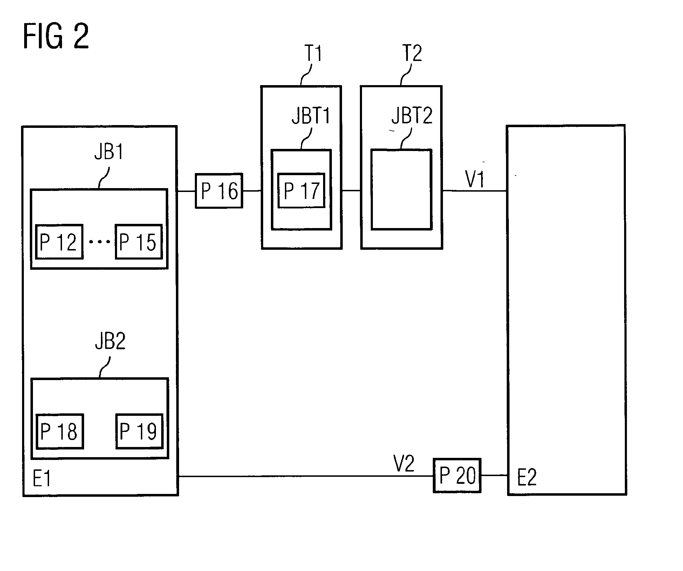

Das gerade beschriebene Szenario wird nachfolgend anhand der Figuren 1 und 2 veranschaulicht:

Fig. 1 zeigt eine empfangende Einheit E1 und eine sendende Einheit E2 die durch einen ersten Verbindungsweg V1 und einen zweiten Verbindungsweg V2 miteinander verbunden sind. Das dargestellte Szenario betrifft die Übermittlung von Paketen - insbesondere Sprachdaten enthaltene Pakete - vor einem Umschalten des ersten Verbindungsweges V1 auf den zweiten Verbindungsweg V2. Bei den Verbindungswegen V1 und V2 handelt es sich um Verbindungswege über ein paket-orientiertes Kommunikationsnetz, insbesondere das Internet oder ein Intranet. Die empfangende und die sendende Einheit E1, E2 sind dabei beispielsweise durch Endgeräte, Gateways, Server, usw. realisiert.

Der erste Verbindungsweg V1 führt über zwei Transitknoten T1 und T2, wohingegen der zweite Verbindungsweg V2 die empfangende und die sendende Einheit E1, E2 direkt miteinander verbindet. Der zweite Verbindungsweg V2 ist somit "kürzer" als der erste Verbindungsweg V1.

Zum dargestellten Zeitpunkt sind Pakete P10,...,P13 in einem dem ersten Verbindungsweg V1 zugeordneten ersten Jitter Buffer JB1 der empfangenden Einheit E1, ein Paket P15 in einem Jitter Buffer JBT1 des ersten Transitknotens T1 und ein Paket P16 in einem Jitter Buffer JBT2 des zweiten Transitknotens T2 zwischengespeichert. Des Weiteren wird ein Paket P14 zwischen dem ersten Transitknoten T1 und der empfangenden Einheit E1 übertragen, ein Paket P17 steht in der sendenden Einheit E2 für eine Übertragung über den ersten Verbindungsweg V1 bereit.

Fig. 2 zeigt das im Zusammenhang mit Fig. 1 beschriebene Szenario nach einem Umschalten des ersten Verbindungsweges V1 auf den zweiten Verbindungsweg V2, so dass bereits Pakete P18,...,P20 über den zweiten Verbindungsweg V2 übertragen werden bzw. wurden.

Im ersten Jitter Buffer JB1 der empfangenden Einheit E1 sind mittlerweile die Pakete P12,...,P15 zwischengespeichert. Das ursprünglich im Jitter Buffer JBT2 des zweiten Transitknotens T2 zwischengespeicherte Paket P16 wird aktuell zwischen dem ersten Transitknoten T1 und der empfangenden Einheit E1 übertragen. Das ursprünglich in der sendenden Einheit E2 für eine Übertragung über den ersten Verbindungsweg V1 bereit stehende Paket P17 ist im Jitter Buffer JBT1 des ersten Transitknotens T1 zwischengespeichert.

Zusätzlich sind in einem dem zweiten Verbindungsweg V2 zugeordneten zweiten Jitter Buffer JB2 der empfangenden Einheit E1 bereits Pakete P18 und P19 zwischengespeichert. Der erste Jitter Buffer JB1 und der zweite Jitter Buffer JB2 können auch als gemeinsamer Speicher realisiert sein, wobei die dem ersten Verbindungsweg V1 und dem zweiten Verbindungsweg V2 zugeordneten Pakete in unterschiedlichen Bereichen des Speichers zwischengespeichert werden. Ein Paket P20 wird aktuell zwischen der sendenden Einheit E2 und der empfangenden Einheit E1 übertragen.

Somit befinden sich zum Zeitpunkt des Eintreffens der ersten Pakete P18, P19 über den neuen zweiten Verbindungsweg V2, noch Pakete P12,...,P15 im ersten Jitter Buffer JB1 die über den alten ersten Verbindungsweg V1 übertragen wurden, bzw. es werden sogar noch Pakete P16, P17 über den alten ersten Verbindungsweg V1 übertragen.

Für ein Umschalten vom ersten Verbindungsweg V1 auf den zweiten Verbindungsweg V2 bestehen in der empfangenden Einheit E2 die beiden im Folgenden beschriebenen Möglichkeiten.

Gemäß einer ersten Möglichkeit erfolgt ein Umschalten zum Zeitpunkt des ersten an der empfangenden Einheit E1 über den zweiten Verbindungsweg V2 eintreffenden Pakets P18. Dies bedeutet jedoch, dass die noch im ersten Jitter Buffer JB1 zwischengespeicherten Pakete P12,...,P15 und die noch über den ersten Verbindungsweg v1 aktuell übermittelten Pakete P16, P17 verworfen werden. Dies führt zu merkbaren Sprachlücken - in der Literatur häufig mit "speech clipping" bezeichnet.

Gemäß einer zweiten Möglichkeit können noch alle im ersten Jitter Buffer JB1 zwischengespeicherten Pakete P12,...,P15 und die noch über den ersten Verbindungsweg V1 aktuell übermittelten Pakete P16, P17 an den entsprechenden Teilnehmer ausgegeben werden. In der Zwischenzeit werden die über den zweiten Verbindungsweg V2 empfangenen Pakete P20,... im zweiten Jitter Buffer JB2 zwischen gespeichert. Erst nach dem Ausgeben des letzten über den ersten Verbindungsweg V1 empfangenen Pakets P17 werden die im zweiten Jitter Buffer JB2 gespeicherten Pakete P18, P19 ausgegeben. Dies bedeutet jedoch, dass die Ende-zu-Ende Verzögerung für die Datenübertragung zwischen der sendenden und der empfangenden Einheit E2, E1 nicht verbessert wird und damit das eigentliche Ziel des Umschaltens nicht erreicht wird.

Der vorliegenden Erfindung liegt somit die Aufgabe zugrunde, ein Verfahren und eine Datenpakete empfangende Einheit anzugeben, durch welches die oben beschriebenen Probleme beseitigt werden können.

Eine Lösung der Aufgabe erfolgt in Bezug auf das Verfahren ausgehend von den Merkmalen des Oberbegriffs des Patentanspruchs 1 durch deren kennzeichnende Merkmale und in Bezug auf die Datenpakete empfangende Einheit durch die Merkmale des Patentanspruchs 6.

Erfindungsgemäß weisen über einen ersten Verbindungsweg übermittelte Pakete eine erste Paketlaufzeit auf, wobei diese Pakete und in einem ersten Zwischenspeicher der empfangenden Einheit zwischengespeichert werden. Die über einen zweiten Verbindungsweg übermittelten Pakete weisen eine zweite, im Vergleich zur ersten Paketlaufzeit kürzere Paketlaufzeit auf und werden in einem zweiten Zwischenspeicher der empfangenden Einheit zwischengespeichert. Paketlaufzeit bedeutet dabei die Zeitspanne zwischen einem Aussenden der Pakete an der sendenden Einheit bis zum Ausgeben der Pakete an der empfangenden Einheit.

Nach einem Umschalten vom ersten auf den zweiten Verbindungsweg werden in einem ersten Schritt alle im ersten Zwischenspeicher gespeicherten Pakete ausgegeben bzw. weitergeleitet. Erst anschließend werden die im zweiten Zwischenspeicher gespeicherten Pakete ausgegeben, wobei erfindungsgemäß jedes n-te im zweiten Zwischenspeicher gespeicherte Paket verworfen wird oder die Ausgabe der im zweiten Zwischenspeicher gespeicherten Pakete erfolgt komprimiert, d.h. schneller als normalerweise vorgesehen.

Ein wesentlicher Vorteil des erfindungsgemäßen Verfahrens besteht darin, dass das Verfahren auf einfache Weise auch in bereits bestehende Systeme implementiert werden kann.

Vorteilhafte Weiterbildungen der Erfindung sind in den Unteransprüchen angegeben.

Gemäß einer Weiterbildung der Erfindung erfolgt das Verwerfen oder das komprimierte Ausgeben der im zweiten Zwischenspeicher gespeicherten Datenpakete solange, bis die Zeitspanne zwischen einem Aussenden der Pakete an der sendenden Einheit und einem Ausgeben der Pakete an der empfangenden Einheit im Wesentlichen der zweiten Paketlaufzeit entspricht.

Ein Vorteil von in den Unteransprüchen definierten Ausgestaltungen der Erfindung besteht unter anderem darin, dass das Verfahren unabhängig von dem im paket-orientierten Kommunikationsnetz verwendeten Verbindungssteuerungsprotokoll - beispielsweise dem SIP-Protokoll (Session Initiation Protocol) dem H.323-Protokoll oder einem anderen proprietären Protokoll - einsetzbar ist.

Ein Ausführungsbeispiel der Erfindung wird im Folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten vor einem Umschalten eines ersten Verbindungsweges auf einen zweiten Verbindungsweg;

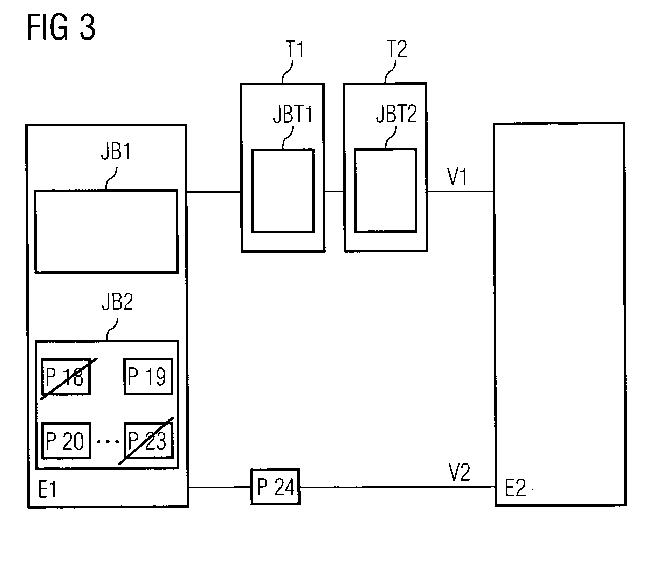

- Fig. 2:: ein Strukturbild zur schematischen Darstellung des Szenarios nach dem Umschalten des ersten Verbindungsweges auf den zweiten Verbindungsweg gemäß dem Stand der Technik; und Fig. 3: ein Strukturbild zur schematischen Darstellung des erfindungsgemäßen Szenarios nach dem Umschalten des ersten Verbindungsweges auf den zweiten Verbindungsweg.
- Fig. 3:: zeigt das im Zusammenhang mit Fig. 1 und Fig. 2 beschriebene Szenario nach einem Umschalten des ersten Verbindungsweges V1 auf den zweiten Verbindungsweg V2, wobei bereits alle im ersten Jitter Buffer JB1 zwischengespeicherten Pakete P10,...,P17 ausgegeben sind. Aktuell sind im zweiten Jitter Buffer JB2 Pakete P18,...,P23 zwischengespeichert. Zusätzlich wird ein Paket P24 über den zweiten Verbindungsweg V2 zwischen der sendenden und der empfangenden Einheit E2, E1 übermittelt.

Bei dem beschriebenen Szenario ist der zweite Verbindungsweg V2 "kürzer" als der erste Verbindungsweg V1, d.h. dass die Paketlaufzeit - entspricht die Zeitspanne zwischen einem Aussenden der Pakete an der sendenden Einheit E2 bis zum einem Ausgeben der Pakete an der empfangenden Einheit E1 - über den zweiten Verbindungsweg V2 kürzer ist, als die Paketlaufzeit über den ersten Verbindungsweg V1.

Aufgrund der Tatsache, dass die im zweiten Jitter Buffer JB2 zwischengespeicherten Pakete P18,...,P23 erst zu dem Zeitpunkt ausgegeben werden, an dem im ersten Jitter Buffer JB1 keine Pakete mehr gespeichert sind, entspricht die Paketlaufzeit der über den zweiten Verbindungsweg V2 übermittelten Pakete P18,...,P24 im Wesentlichen der Paketlaufzeit der über den ersten Verbindungsweg V1 übermittelten Pakete P10,...,P17.

Für eine Reduzierung der Paketlaufzeit der über den zweiten Verbindungsweg V2 übermittelten Pakete P18,... werden erfindungsgemäß die beiden folgenden Möglichkeiten vorgeschlagen:

Gemäß einer ersten Möglichkeit wird jedes n-te (n ist eine ganzzahlige natürliche Zahl) im zweiten Jitter Buffer JB2 zwischengespeicherte Pakete P18,...,P23 verworfen. Im vorliegenden Ausführungsbeispiel werden die Pakete P18, P23,... (in der Figur durch die durchgestrichenen Pakete veranschaulicht) verworfen, so dass n = 5 ist, d.h. dass jedes 5-te Paket verworfen wird.

Die im zweiten Jitter Buffer JB2 zwischengespeicherten Pakete P18,...,P23 werden dabei solange verworfen, bis die Zeitspanne zwischen einem Aussenden der Pakete an der sendenden Einheit E2 und einem Ausgeben der Pakete an der empfangenden Einheit E1 im Wesentlichen der Paketlaufzeit über den zweiten Verbindungsweg V2 entspricht.

Bei der beschriebenen Möglichkeit handelt es sich somit um einen kontrollierten Paketverlaust, der für einen Teilnehmer kaum wahrnehmbar ist.

Gemäß einer zweiten - nicht dargestellten - Möglichkeit werden die im zweiten Jitter Buffer JB2 zwischengespeicherte Pakete P18,...,P23 komprimiert ausgegeben, d.h. die Pakete werden schneller ausgegeben als vorgesehen. Die im zweiten Jitter Buffer JB2 zwischengespeicherte Pakete P18,...,P23 werden dabei wiederum solange komprimiert ausgegeben, bis die Zeitspanne zwischen einem Aussenden der Pakete an der sendenden Einheit E2 und einem Ausgeben der Pakete an der empfangenden Einheit E1 im Wesentlichen der Paketlaufzeit über den zweiten Verbindungsweg V2 entspricht.

Die komprimierte Ausgabe kann dabei wie in der deutschen Patentanmeldung mit dem amtlichen Aktenzeichen 103 27 057 vorgeschlagen erfolgen. Eine derartige komprimierte Ausgabe der Pakete ist für einen Teilnehmer ebenfalls kaum wahrnehmbar.

Mittels der beiden beschriebenen Verfahren besteht auf einfache Weise die Möglichkeit die bestehende Ausgabeverzögerung für die im zweiten Jitter Buffer JB2 zwischengespeicherten Pakete P18,...,P23 für einen entsprechenden Teilnehmer kaum wahrnehmbar "aufzuholen".

## Patentansprüche

1. Verfahren zum Umschalten einer paket-orientierten Kommunikationsverbindung zwischen einer empfangenden Einheit (E1) und einer sendenden Einheit (E2) von einem ersten Verbindungsweg (V1) auf einen zweiten Verbindungsweg (V2), bei dem über den ersten Verbindungsweg (V1) übermittelte Pakete (P10,...,P17) eine erste Paketlaufzeit aufweisen und in einem ersten Zwischenspeicher (JB1) der empfangenden Einheit (E1) zwischengespeichert werden und über den zweiten Verbindungsweg (V2) übermittelte Pakete (P18,...,P24) eine zweite, kürzere Paketlaufzeit aufweisen und in einem zweiten Zwischenspeicher (JB2) der empfangenden Einheit (E1) zwischengespeichert werden,
**dadurch gekennzeichnet,**
**dass** in einem ersten Schritt alle im ersten Zwischenspeicher (JB1) gespeicherten Pakete (P10,...,P17) ausgegeben werden, und dass anschließend die im zweiten Zwischenspeicher (JB2) gespeicherten Pakete (P18,...,P24) ausgegeben werden, wobei die Ausgabe der im zweiten Zwischenspeicher (JB2) gespeicherten Pakete (P18,...,P24) komprimiert erfolgt oder jedes n-te im zweiten Zwischenspeicher (JB2) gespeicherte Paket (P18,...,P24) verworfen wird.

2. Verfahren nach Anspruch 1,
**dadurch gekennzeichnet,**
**dass** die Pakete (P18,...,P24) solange verworfen oder komprimiert werden, bis die Zeitspanne zwischen einem Aussenden der Pakete (P18,...,P24) an der sendenden Einheit (E2) und einem Ausgeben der Pakete (P18,...,P24) an der empfangenden Einheit (E1) annähernd der zweiten Paketlaufzeit entspricht.

3. Verfahren nach einem der vorhergehenden Ansprüche,
**dadurch gekennzeichnet,**
**dass** n eine ganzzahlige natürliche Zahl ist.

4. Verfahren nach einem der vorhergehenden Ansprüche,
**dadurch gekennzeichnet,**
**dass** die paket-orientierte Kommunikationsverbindung über das Internet und/oder ein Intranet aufgebaut wird.

5. Verfahren nach einem der vorhergehenden Ansprüche,
**dadurch gekennzeichnet,**
**dass** als verbindungssteuerungsprotokoll für die Kommunikationsverbindung das SIP-Protokoll, das H.323-Protokoll oder ein anderes proprietäres Protokoll verwendet wird.

6. Empfangende Einheit (E1)
zur Durchführung aller Schritte des Verfahrens nach einem der vorstehenden Patentansprüche.

7. Empfangende Einheit (E1) nach Anspruch 6,
**dadurch gekennzeichnet,**
**dass** der erste Zwischenspeicher (JB1) und der zweite Zwischenspeicher (JB2) durch einen gemeinsamen Speicher realisiert sind.

## Claims

1. Method for switching a packet-oriented communication connection between a receiver unit (E1) and a transmitter unit (E2) from a first connection path (V1) to a second connection path (V2),
in which the packets (P10, ..., P17) transmitted over the first connection path (V1) have a first packet propagation time and are temporarily stored in a first intermediate memory (JB1) of the receiver unit (E1) and the packets (P18, ..., P24) transmitted over the second connection path (V2) have a second shorter packet propagation time and are temporarily stored in a second intermediate memory (JB2) of the receiver unit (E1),
**characterised in that**,
all the packets (P10 ,..., P17) stored in the first step in the first intermediate memory (JB1) are output and that subsequently the packets (P18, ..., P24) stored in the second intermediate memory (JB2) are output, with the packets (P18, ..., P24) stored in the second intermediate memory (JB2) being output compressed or each n^{th} packet (P18, ..., P24) stored in the second intermediate memory (JB2) being discarded.

2. Method according to claim 1,
**characterised in that**,
the packets (P18, ..., P24) are discarded or compressed until the time between a transmission of the packets (P18, ..., P24) at the transmitter unit (E2) and an output of the packets (P18, ..., P24) at the receiver unit (E1) essentially matches the second packet propagation time.

3. Method according to one of the preceding claims,
**characterised in that**,
n is an integer, natural number.

4. Method according to one of the preceding claims,
**characterised in that**,
the packet-oriented communication connection is established over the Internet and/or an intranet.

5. Method according to one of the preceding claims,
**characterized in that**,
the SIP protocol, the H.323 protocol, or another proprietary protocol can be used as the connection control protocol for the communication connection.

6. Receiver unit (E1)
For carrying out all steps of the method according to one of the preceding claims.

7. Receiver unit (E1) according to claim 6,
**characterised in that**,
the first intermediate memory (JB1) and the second intermediate memory (JB2) are realised by a common memory.

## Revendications

1. Procédé pour la commutation d'une liaison de communication orientée paquets entre une unité (E1) réceptrice et une unité (E2) émettrice d'une première voie de communication (V1) sur une seconde voie de communication (V2), dans lequel des paquets (P10, ..., P17) transmis au moyen de la première voie de communication (V1) présentent un premier temps de propagation de paquet et sont stockés provisoirement dans une première mémoire intermédiaire (JB1) de l'unité réceptrice (E1) et des paquets (P18, ..., P24) transmis par la seconde voie de communication (V2) présentent un second temps de propagation de paquet plus court et sont stockés provisoirement dans une seconde mémoire intermédiaire (JB2) de l'unité (E1) réceptrice,
**caractérisé en ce que**,
dans une première étape, tous les paquets (P10, ..., P17) stockés dans la première mémoire intermédiaire (JB1) sont produits en sortie et ensuite les paquets (P18, ..., P24) stockés dans la seconde mémoire intermédiaire (JB2) sont produits en sortie, la sortie des paquets stockés dans la seconde mémoire intermédiaire (JB2) s'effectuant de façon comprimée ou chaque n-ième paquet (P18,..., P24) stocké dans la seconde mémoire intermédiaire (JB2) étant rejeté.

2. Procédé selon la revendication 1,
**caractérisé en ce que**
les paquets (P18, ..., P24) sont rejetés ou comprimés jusqu'à ce que le laps de temps s'écoulant entre une émission des paquets (P18, ..., P24) sur l'unité (E2) émettrice et une sortie des paquets (P18, ..., P24) sur l'unité (E1) réceptrice corresponde approximativement au second temps de propagation de paquet.

3. Procédé selon l'une quelconque des revendications précédentes,
**caractérisé en ce que** n est un nombre naturel entier.

4. Procédé selon l'une quelconque des revendications précédentes, **caractérisé en ce que**
la liaison de communication orientée paquets est établie par Internet et/ou intranet.

5. Procédé selon l'une quelconque des revendications précédentes, **caractérisé en ce que**
le protocole SIP, le protocole H.323 ou un autre protocole propriétaire est utilisé comme protocole de commande de liaison pour la liaison de communication.

6. Unité (E1) réceptrice
pour la mise en oeuvre de toutes les étapes du procédé selon l'une quelconque des revendications précédentes.

7. Unité (E1) réceptrice selon la revendication 6,
**caractérisé en ce que**
la première mémoire intermédiaire (JB1) et la seconde mémoire intermédiaire (JB2) sont réalisées par une mémoire commune.
